# EUROPEAN PATENT SPECIFICATION

(11) **EP 2 193 703 B1**
(45) Date of publication and mention of the grant of the patent: **02.11.2016**
(21) Application number: 09177766.4
(22) Date of filing: 02.12.2009
(51) Int. Cl.: A01D 34/82, A01D 75/18, B60K 28/04, B60N 2/00, A01D 67/04, A01D 75/20

(54) **Safety device based on a presence of the operator on the seat of a tractor**
Sicherheitsvorrichtung auf Grundlage der Präsenz des Bedieners auf dem Sitz eines Traktors
Dispositif de sécurité basé sur la présence d'un opérateur sur le siège d'un tracteur

(30) Priority: 05.12.2008 IT MI20082159
(43) Date of publication of application: 09.06.2010
(73) Proprietor: GGP Italy S.p.A., 31033 Castelfranco Veneto (TV) (IT)
(72) Inventor: Ferrari, Simone, 31022, PREGANZIOL (TV) (IT)
(74) Representative: Mittler, Enrico

(56) References cited:
- EP-A2- 0 518 162
- WO-A2-2007/145723
- CA-C- 1 336 105
- US-A- 2 794 089
- US-A- 4 385 863
- US-A1- 2004 090 338

## Description

The present invention concerns a safety device based on the presence of an operator on a seat of a tractor mower (See e.g. EP 0 518 162 A2).

The presence device of the operator on the seat is the most important unit on the tractor in terms of safety.

From applicable regulations, it is known that the absence of the operator triggers the blockage of a number of utilities such as the motor; e.g., if the operator abandons the tractor seat, the safety regulations require the motor to be automatically switched off and consequently the tractor and the cutting blades come to a halt within the envisaged space-time limits.

Safety devices are known with switches located underneath the seat, that require adjustments, or switches inside the seat, both easily accessible for the operator, including the power leads that can be so easily tampered with.

The above solutions for the conception and the positioning of the switch do not ensure correct operation in certain gradient or rough terrain conditions: even small jumps of the operator positioned on the seat cause continual stops and starts of the tractor due to the continual operation of the switch.

US-2794089 discloses switches for automotive vehicles.

Object of the present invention is therefore to make a protected safety device for tractor mowers that does not require adjustments and ensures operation in all work conditions, with component parts that are simple to make.

According to the invention, such object is achieved with a safety device based on the presence of an operator on a seat of a tractor mower, comprising a switch for the re-establishment of the safety conditions in case of absence of the operator on the seat, and operating means of the switch in association with the presence or not of the operator on the seat, characterised in that it provides a fixed inferior support of the switch integral with the frame of the tractor a mobile superior support of operating means of the switch vertically slidable along guiding pins and associated to the lowering of the seat in presence of the operator by means of shock absorbers integral to said mobile support, springs interposed between the fixed support and the mobile support and slidably embracing the vertical guiding pins, said fixed support and mobile support being in relation of reversible reciprocal insertion between them in case of presence of the operator on the seat, the switch, operating means and the springs being enclosed between the fixed support and the mobile support.

These and other characteristics of the present invention will be made clearer by the following detailed description of an example of its practical embodiment illustrated by, but not limited to the attached drawings, in which:
the figure 1 shows a vertical section view of a seat of a tractor without operator, or with the switch deactivated;
the figure 2 shows a section view of the figure 1 according to the line II-II;
the figure 3 shows a partial view of the figure 2 with operator, or with switch activated.

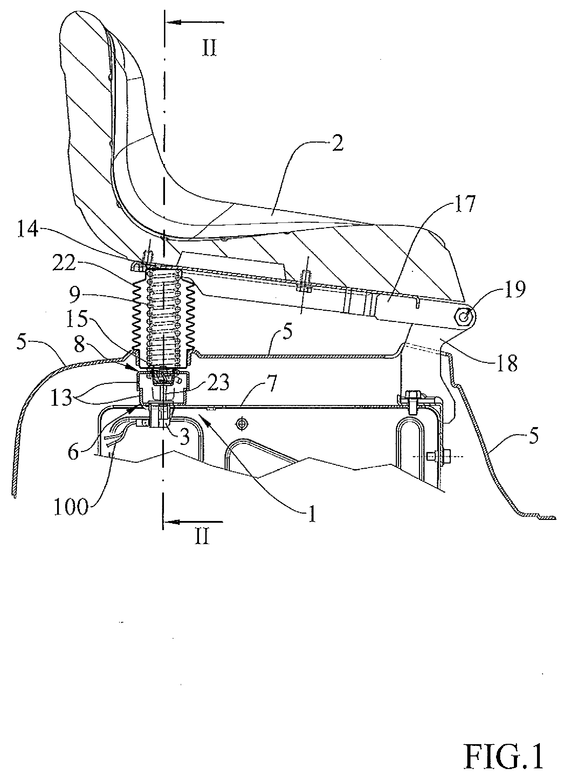

With reference to the figure 1, a safety device 1 can be seen based on the presence of an operator on a seat 2, particularly for tractor mower, not shown, comprising a microswitch or switch 3 for re-establishing the safety conditions in case of the absence of the operator from the seat 2, and operating means 4, 11 of the microswitch 3 in relation to the presence or not of the operator on the seat 2. The microswitch 3 and said operating means 4, 11 of the microswitch 3 are enclosed by means of protection 5, 6, 8 which isolate the operating means 4, 11 and the microswitch 3 with relevant power leads or wiring harness 100 making them inaccessible to the operator and preventing tampering and accidental damage.

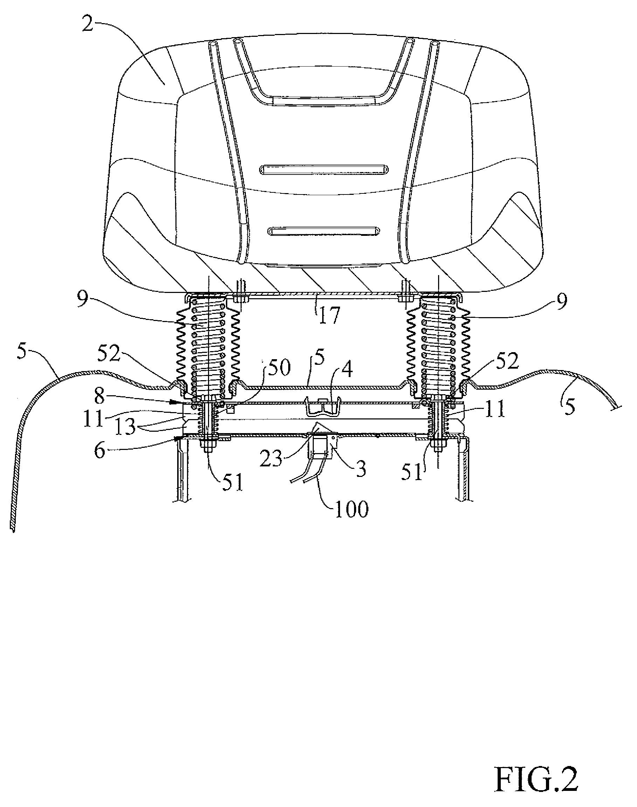

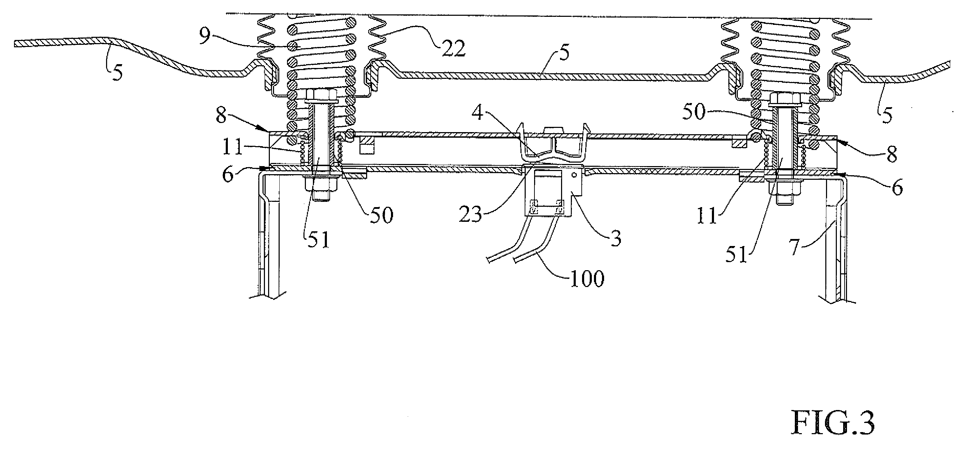

In the figures 2 and 3 in particular the operating means can be seen of the microswitch 3 which are a cam 4 and a pair of springs 11 which embrace slidably by means of cylindrical sliding spacers 50 respective vertical guiding pins 51 fastened to the frame 7 of the tractor.

The seat 2 is mounted on a plate 17 integral with this, connected in a turning way in the anterior part by means of a fulcrum 19 and a bracket 18, integral with the frame 7 of the tractor.

The posterior part of the seat 2 rests on the superior extremity 14 of two shock-absorbing springs 9, or analogous drive means 9 not considered here, while the inferior extremity 15 of said shock-absorbing springs 9 is integral with a mobile support 8.

The mobile support 8 is guided vertically by the pins 51 which at the superior extremity have superior stop elements 52, the mobile support 8 being pushed upwards by the springs 11. In the absence of the operator on the seat, the superior support 8 is stopped up against the superior stop elements 52.

The mobile support 8 fits in a reversible way above a fixed support 6 rigidly connected to the frame 7. The guiding pins 51 are in the inferior part integral with the fixed support 6 which represents the inferior stop element of the mobile support 8. The springs 11 are then interposed between the fixed support 6 and the mobile support 8.

When the operator is on the seat, the mobile support 8 fits completely reversibly on the fixed support 6 compressing the springs 11 until the inferior stop is reached. The springs 11 are in any case designed to ensure the stop of the mobile support 8 and therefore the total operation of the lever 23 of the switch 3, because this also facilitates correct operation on rough and sloped terrain. If the springs 11 are only partially compressed, the lever 23 would be only partially operated and in case of uneven terrain, the elastic play would cause the deactivating and reactivating of the switch 3 prejudicing the continuous movement of the tractor.

Advantageously, the springs 11 are positioned and sized to suit the shape and weight of the seat in such a way that if a limited weight is accidentally present on the seat, e.g., a tool weighing a few kilos, the safety conditions are maintained as envisaged in the absence of the operator.

To the mobile support 8, and in a position suitable to operate the microswitch 3, the cam 4 is connected, which in the presence of the operator operates the lever 23 of the microswitch 3.

When the operator is absent, the springs 11 move the mobile support 8 vertically away from the fixed support 6, lifting the cam 4 from the lever 23 of the microswitch 3, determining a safety situation envisaged in the absence of the operator.

As is clear from the figure 3, the cam 4 has an inferior surface with central concavity, such as to prevent the lever 23 from sticking.

In particular, the weight of the operator acts not only on the bracket 18 which discharges on the frame 7, but also on the shock-absorbing springs 9, connected to the mobile support 8 on which they discharge their part of weight. The mobile support 8 with connected cam 4 drops because the constant elasticity of the springs 11 is below that of the shock-absorbing springs 9 operating the microswitch 3.

Advantageously, the fixed support 6 and the mobile support 8 comprise reciprocal guide side surfaces 13 suitable for favouring a reciprocal centred insertion, and a protection of the operating means 4, 11. More specifically, the mobile support 8 is "C" shaped with aperture towards the bottom of such width as to contain the analogous "C" shape with aperture towards the top but with a reduced width of the fixed support 6, the coupling achieving a closed protective section hollow shape (figure 1).

Advantageously, the means of protection of the operator presence device comprise a wheel-covering body 5 integral with the frame 7 that covers the fixed support 6 and the mobile support 8, making the supports 6, 8 inaccessible to the operator.

The body 5 comprises two holes for the passage of the shock absorbers 9 which remain prevalently external though protected by hoods 22.

The difficulties are therefore ensured of accessing the safety device and the relevant power leads, in any case reachable by removing the posterior plate of the tractor in case of need.

The cam 4 and the microswitch 3 are centrally positioned with respect to the guiding pins 51 (figure 2), thereby offsetting the unbalances of the weight of the operator to the right or left (operator not seated correctly).

The present invention also allows protecting the safety device from dust and tractor operation residues. The duration and efficiency of the device is improved.

## Claims

1. Safety device (1) based on the presence of an operator on a seat (2) of a tractor mower, comprising a switch (3) for the re-establishment of the safety conditions in case of absence of the operator on the seat (2), and operating means (4) of the switch (3) in association with the presence or not of the operator on the seat (2),
**characterized in that** it provides
a fixed inferior support (6) of the switch (3) integral with the frame (7) of the tractor,
a mobile superior support (8) of operating means (4) of the switch (3) vertically slidable along guiding pins (51) and associated to the lowering of the seat (2) in presence of the operator by means of shock absorbers (9) integral to said mobile support (8),
springs (11) interposed between the fixed support (6) and the mobile support (8) and slidably embracing the vertical guiding pins (51),
said fixed support (6) and mobile support (8) being in relation of reversibile reciprocal insertion between them in case of presence of the operator on the seat (2), the switch (3), operating means (4) and the springs (11) being enclosed between the fixed support (6) and the mobile support (8).

2. Device (1) according to claim 1, **characterized in that** the mobile support (8) has a "C" shape with aperture towards the bottom of such width as to contain and contribute to guide the analogous "C" shape with aperture towards the top but with a reduced width of the fixed support (6), the coupling achieving a closed protective section hollow shape.

3. Device (1) according to any of the preceding claims, **characterized in that** the mobile support (8) is vertically slidable between a raised position without seated operator and deactivated switch wherein it interacts with superior stops (52) of the guiding pins (51), and a lowered position with seated operator and activated switch wherein it rests on the fixed support (6) with compressed springs (11).

4. Device (1) according to any of the preceding claims, **characterized in that** the fixed support (6) and the mobile support (8) are contained together with a wiring harness (100) inside a body (5).

5. Device (1) according to claim 4, **characterized by** in that wiring harness (100) is accessible only by removing a posterior plate or the body (5).

## Patentansprüche

1. Sicherheitsvorrichtung (1), die auf der Anwesenheit eines Bedieners auf einem Sitz (2) eines Schleppermähwerks basiert, aufweisend einen Schalter (3) für die Wiederherstellung der Sicherheitsbedingungen im Falle der Abwesenheit des Bedieners auf dem Sitz (2), und ein Betätigungsmittel (4) des Schalters (3) in Zusammenhang mit der An- oder Abwesenheit des Bedieners auf dem Sitz (2),
**dadurch gekennzeichnet, dass** sie versehen ist mit
einer festen unteren Lagerung (6) des Schalters (3), die einstückig mit dem Rahmen (7) des Schleppers ausgebildet ist,
einer beweglichen oberen Lagerung (8) des Betätigungsmittels (4) des Schalters (3), welches vertikal entlang von Führungsbolzen (51) und in Zusammenhang mit dem Absenken des Sitzes (2) bei Anwesenheit des Bedieners mittels Stoßdämpfer (9), welche mit der beweglichen Lagerung (8) einstückig ausgebildet sind, verschiebbar ist,
Federn (11), welche zwischen der festen Lagerung (6) und der beweglichen Lagerung (8) platziert sind und die vertikalen Führungsbolzen (51) gleitend umschließen, wobei
die feste Lagerung (6) und die bewegliche Lagerung (8) gegenseitig in reversiblem Eingriff stehen und gegeneinander verschiebbar sind, falls sich der Bediener auf dem Sitz (2) befindet, wobei der Schalter (3), das Betätigungsmittel (4) und die Federn (11) zwischen der festen Lagerung (6) und der beweglichen Lagerung (8) eingeschlossen werden.

2. Vorrichtung (1) nach Anspruch 1, **dadurch gekennzeichnet, dass**, die bewegliche Lagerung (8) in einer "C"-Form mit Öffnung in Richtung des Bodens ausgeführt ist, wobei deren Breite derart gestaltet ist, dass sie die analoge "C"-Form der festen Lagerung (6), welche mit Öffnung nach oben aber mit geringerer Breite ausgeführt ist, enthalten kann und zur Führung beitragen kann, wobei die Kopplung einen geschlossenen Hohlformschutzabschnitt erreicht.

3. Vorrichtung (1) nach einem der vorhergehenden Ansprüche, **dadurch gekennzeichnet, dass** die bewegliche Lagerung (8) vertikal verschiebbar ist zwischen einer erhöhten Position ohne sitzenden Bediener und deaktiviertem Schalter, worin sie mit den oberhalb angeordneten Anschlägen (52) der Führungsbolzen (51) interagiert, und einer unteren Position mit sitzendem Bediener und aktiviertem Schalter, worin sie auf der festen Lagerung (6) mit zusammengedrückten Federn (11) ruht.

4. Vorrichtung (1) nach einem der vorhergehenden Ansprüche, **dadurch gekennzeichnet, dass** die feste Lagerung (6) und die bewegliche Lagerung (8) zusammen mit einem Kabelbaum (100) in einem Gehäuse (5) enthalten sind.

5. Vorrichtung (1) nach Anspruch 4, **dadurch gekennzeichnet, dass** der Kabelbaum (100) nur durch Entfernung einer rückseitigen Platte oder des Gehäuses (5) zugänglich ist.

## Revendications

1. Dispositif de sécurité (1) basé sur la présence d'un opérateur sur un siège (2) d'un tracteur tondeuse, comprenant un interrupteur (3) pour le rétablissement des conditions de sécurité en cas d'absence de l'opérateur sur le siège (2), et des moyens d'actionnement (4) de l'interrupteur (3) en association avec la présence ou non de l'opérateur sur le siège (2),
**caractérisé en ce qu'**il fournit
un support fixe (6) inférieur de l'interrupteur (3) d'un seul bloc avec le cadre (7) du tracteur,
un support mobile (8) supérieur des moyens d'actionnement (4) de l'interrupteur (3) pouvant coulisser verticalement le long d'axes de guidage (51) et associé à l'abaissement du siège (2) en présence de l'opérateur au moyen d'amortisseurs (9) d'un seul bloc avec ledit support mobile (8),
des ressorts (11) intercalés entre le support fixe (6) et le support mobile (8) et embrassant de manière coulissante les axes de guidage (51) verticaux,
lesdits support fixe (6) et support mobile (8) étant en relation d'insertion réciproque réversible entre eux en cas de présence de l'opérateur sur le siège (2), l'interrupteur (3), les moyens d'actionnement (4) et les ressorts (11) étant enfermés entre le support fixe (6) et le support mobile (8).

2. Dispositif (1) selon la revendication 1, **caractérisé en ce que** le support mobile (8) a une forme de "C" avec l'ouverture vers le fond d'une largeur permettant de contenir et de contribuer à guider la forme de "C" analogue avec l'ouverture vers le haut mais avec une largeur réduite du support fixe (6), le couplage obtenant une forme creuse à section protégée fermée.

3. Dispositif (1) selon l'une quelconque des revendications précédentes, **caractérisé en ce que** le support mobile (8) peut être coulissé verticalement entre une position soulevée sans opérateur assis et interrupteur désactivé dans lequel il interagit avec les éléments d'arrêts (52) supérieurs des axes de guidage (51), et une position abaissée avec opérateur assis et interrupteur activé dans lequel il repose sur le support fixe (6) avec des ressorts (11) comprimés.

4. Dispositif (1) selon l'une quelconque des revendications précédentes, **caractérisé en ce que** le support fixe (6) et le support mobile (8) sont retenus conjointement avec un harnais de câblage (100) à l'intérieur d'une carrosserie (5).

5. Dispositif (1) selon la revendication 4, **caractérisé en ce que** le harnais de câblage (100) est accessible seulement en enlevant une plaque postérieure ou la carrosserie (5).
